## Europäisches Patentamt
## European Patent Office
## Office européen des brevets

(19)

(11) Publication number: **0 050 931**

**A1**

(12) **EUROPEAN PATENT APPLICATION**

(21) Application number: **81304690.1**

(22) Date of filing: **08.10.81**

(51) Int. Cl.³: **A 01 G 9/10**
**C 05 F 11/04**

(30) Priority: **23.10.80 FI 803329**

(43) Date of publication of application:
**05.05.82 Bulletin 82/18**

(84) Designated Contracting States:
**AT BE CH DE FR IT LI LU NL SE**

(71) Applicant: **Farmos-Yhtymä Oy**
**P.O. Box 425**
**SF-20101 Turku 10(FI)**

(72) Inventor: **Rannali, Pertti Kalevi**
**Maaherrankatu 29 B 21**
**SF-20200 Turku 20(FI)**

(74) Representative: **Collier, Jeremy Austin Grey et al,**
**J.A.Kemp & Co. 14, South Square Gray's Inn**
**London WC1R 5EU(GB)**

(54) **Growth substrate bed.**

(57) The invention provides a growth substrate bed suitable for growing plants, which is easy to handle and transport. Such a bed consists of a bag-shaped casing or other flexible container made of some suitable material, preferably plastic, partly filled with a growth substrate medium, preferably particulate, which swells when water is added thereto. A suitable growth substrate medium is compressed peat pellets. The bag is filled with the medium to such an extent that after watering the medium will fill the bag completely. In order to preserve a uniform distribution of the medium in the bag during handling and transportation and before watering, the bed is rolled up, preferably in its longitudinal direction.

EP 0 050 931 A1

Croydon Printing Company Ltd.

0050931

- 1 -

DESCRIPTION

"GROWTH SUBSTRATE BED"

This invention relates to a growth substrate bed for plants, which is particularly intended for growing plants where the natural soil is absent or otherwise unsuitable for this purpose. Such growth substrate beds are known in various forms. Usually they consist of bags which are made of plastic or some similar material essentially impervious to moisture, and filled with a suitable growth medium, usually peat or peat-based. Such a bag or bed is put in the desired growth place and, into the upper surface of the bag, are cut suitable holes or greater openings depending on the sort of plant to be grown.

Different kinds of growth media can be used. However, peat to which fertilizers and lime have been added has proved to be especially useful for many kinds of plants. Synthetic growth substrates such as glass-wool or rock-wool have also been used, and here again fertilizers and optionally other nutrients must be added to these substrates before planting or sowing.

In order to reduce the costs of transportation and handling, such growth substrate beds have been made essentially dry, i.e. with an essentially dry growth medium in the bag. To this dry and usually pulverulent growth medium fertilizers and optionally other nutrients are added, preferably in the manufacturing stage. It is practical to add the fertilizers and other nutrients in dry form and mix them carefully with the pulverulent growth medium. Alternatively, part of the fertilizers and nutrients can be added to the growth substrate bed in the place of growth.

- 2 -

Further, it is known to reduce the transportation volume of growth substrate beds by using a compressed growth medium such as a pressed peat block. The growth substrate bag is not completely filled with the compressed, dry medium, and space is left for the swelling caused by the addition of water. Such growth substrate beds have proved to be very useful and easily handled because of the small space needed. However, it is a disadvantage of such pressed peat blocks that when the block swells after watering, a medium of the necessary porosity is not obtained, although the peat swells essentially to its volume before pressing.

The porosity of the growth medium is of the utmost importance in growth beds like these, because the bag material itself is impervious to air and it is essential for the medium to be adequately aerated.

According to the present invention, the necessary porosity and airiness are obtained by using compressed peat pellets as the bag filling material constituting the growth medium. Other dry particulate growth media which swell when water is added thereto can, of course, also be used. However, since the bag is necessarily not filled, the dry pellets or other particles in the bag tend to move to one corner of it during handling and transportation. If the bed is watered in this condition, an unevenly filled bag results, the contents of which cannot be uniformly distributed when they have swollen. Also before watering, the even distribution of the contents has proved to be difficult and time-wasting.

The invention solves this problem by rolling up the bag or other container with the peat pellets evenly distributed therein, and thereby preventing movement of the contents. Not even rough handling causes any notable movement of the contents inside the container. Before the container is rolled up, surplus air therein is preferably removed. The container is spread out again only on the final growth place. Holes necessary for the plants to be set or sown are then cut into the upper surface of the container. Then the growth medium in the container is wetted with a suitable amount of water, after which the medium swells and fills the container uniformly.

The present invention accordingly provides a growth substrate bed comprising a flexible container partly filled with an evenly distributed dry particulate growth medium which swells when water is added thereto so as substantially to fill the said container, the said container being fastened in a rolled configuration sufficiently tight to prevent substantial displacement of the said growth medium during handling and transportation.

The size of the growth substrate bed can vary within a wide range depending on the purpose of use. For amateur and home use, where herbs are grown for example in window boxes, on balconies or paved areas or at holiday cottages on rocky ground, a suitable size of the bed is about 1.5 m long and 25 cm broad. A suitable depth of the wetted medium in the bed is 10 - 15 cm.

The growth medium is preferably peat pellets made by compressing suitable coarse fertilized peat e.g. Spagnum moss peat. The peat is mixed with appropriate amounts of lime and fertilizer, compressed to about one fifth of its original volume and extruded through circular orifices. The pellets obtained are dried, e.g. into hot air. They are typically cylindrical, 5 to 25 mm in diameter and 5 to 80 mm long. The weight of such peat pellets may be approximately 600 g/l. One kilo of these pellets gives, after addition of about 1.8 litres of preferably warm water, about 7 - 8 l wetted growth medium peat.

- 4 -

The growth bed is preferably filled to about 1/5 - 1/3 of its volume with the said peat pellets, so that wetting surely gives a completely filled growth bed, but one in which the growth medium is nevertheless porous enough to ensure the necessary airiness for the roots of the plants to be grown. The airiness of the growth substrate medium is especially important in such growth beds, where the bag is made of impervious plastic, because the air necessary for the root system of the plants must then pass through the bed from the holes cut into the upper surface of the bag.

The growth substrate bed described above has proved to be very useful for a variety of smaller plants on different kinds of growth places, for example on bare rock. The tight surface material of the bed is then advantageous, because the water added to the bed is very well kept by the bed, and the plants thrive for long periods without watering. This is important especially for amateur growers growing plants at holiday cottages, where the plants usually are watered at weekends only.

Compressed peat pellets are the preferred growth substrate medium for this invention. It is, however, fully within the scope of the invention to use other known, prferably granular, growth substrate materials provided that the material has a good swelling ability when watered and a good airiness in the wetted condition.

The invention includes within its scope a method of providing a plant with a medium in which to grow which comprises unfastening and spreading out a growth substrate bed of the invention, watering the bed to cause the particulate medium to swell and substantially fill the container, and planting one or more plants in the said medium.

- 5 -

CLAIMS


1.  A growth substrate bed comprising a flexible container partly filled with a dry growth medium which swells when water is added thereto so as substantially to fill the said container, characterized in that the said container has a dry particulate growth medium evenly distributed therein and is fastened in a rolled configuration sufficiently tight to prevent prevent substantial displacement of the said particulate growth medium during handling and transportation of the container.

2.  A growth substrate bed according to claim 1 characterized in that the said growth medium comprises compressed peat pellets and fertilizer.

3.  A growth substrate bed according to claim 1 or 2 characterized in that the container is a rolled up, flexible, water-impervious plastic bag.

4.  A growth substrate bed according to claim 3 characterized in that the bag is rectangular and is rolled up in a longitudinal direction.

5.  A method of providing a plant with a medium in which to grow which comprises unfastening and spreading out a growth substrate bed as claimed in any of the preceding claims, watering the bed to cause the particulate medium to swell and substantially fill the container, and planting one or more plants in the said medium.

0050931

| European Patent Office | EUROPEAN SEARCH REPORT | Application number<br>EP 81 30 4690 |
|---|---|---|

## DOCUMENTS CONSIDERED TO BE RELEVANT

| Category | Citation of document with indication, where appropriate, of relevant passages | Relevant to claim |
|---|---|---|
| | <u>DE - A - 2 807 619</u> (FARMOS-YHTYMA)<br><br>* pages 5,6 - page 4, paragraph 1 * | 1,2,5 |
| | <u>GB - A - 2 014 024</u> (ASSOCIATION <u>FORET-CELLULOSE</u>)<br><br>* page 3, line 19 to line 47 - figures 1,2 * | 1,3,4 |
| | <u>DE - A - 2 439 616</u> (JIFFY PRODUCTS <u>INT.</u>)<br><br>* page 2, paragraph 4 * | 1,2 |

**CLASSIFICATION OF THE APPLICATION (Int. Cl. 3)**

A 01 G 9/10
C 05 F 11/04

**TECHNICAL FIELDS SEARCHED (Int.Cl. 3)**

A 01 G 9/10
C 05 F 11/02
11/04

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| The present search report has been drawn up for all claims | | |
|---|---|---|
| Place of search<br>The Hague | Date of completion of the search<br>27-01-1982 | Examiner<br>HERYGERS |

EPO Form 1503.1 06.78